# EUROPÄISCHE PATENTSCHRIFT

(11) **EP 1 118 376 B1**
(45) Veröffentlichungstag und Bekanntmachung des Hinweises auf die Patenterteilung: **27.12.2006**
(21) Anmeldenummer: 00124508.3
(22) Anmeldetag: 09.11.2000
(51) Int. Cl.: B01D 63/08

(54) **Abstandselement**
Spacing element
Elément d'espacement

(30) Priorität: 19.01.2000 DE 10001880
(43) Veröffentlichungstag der Anmeldung: 25.07.2001
(73) Patentinhaber: GKSS-Forschungszentrum Geesthacht GmbH, 21502 Geesthacht (DE)
(72) Erfinder: Hilgendorff, Walter, 21395 Tespe (DE); Kahn, Gerhard, 21502 Geesthacht (DE)
(74) Vertreter: Seemann, Ralph

(56) Entgegenhaltungen:
- EP-A- 0 078 667
- WO-A-94/15693
- DE-A- 19 700 231
- US-A- 4 132 649
- US-A- 4 624 778
- US-A- 4 695 380
- US-A- 4 871 456
- US-A- 5 069 789

## Beschreibung

Die Erfindung betrifft ein Abstandselement zur Lenkung von Strömungsmedien, insbesondere bei Vorrichtungen zum Filtern und Trennen der Strömungsmedien durch Mikrofiltration, Ultrafiltration, Nanofiltration und Umkehrosmose, wobei jeweils zwischen zwei im wesentlichen scheibenförmig ausgebildeten Abstandselementen ein wenigstens einseitig vom Strömungsmedium überflossenes Filterelement einschließbar ist und wobei das Abstands element an wenigstens einer seiner beiden Oberflächen einen umlaufenden Rand aufweist.

Ein Abstandselement dieser Art ist bekannt (DE-PS 39 15 197). Abstandselemente dieser Art werden in mehr oder weniger ähnlichen konstruktiven Ausgestaltungen in vielen Trennvorrichtungen verwendet, um einerseits einen definierten Raum zu schaffen, in dem das flächige Filterelement angeordnet bzw. aufgenommen wird und sichergestellt wird, daß das Filterelement wenigstens einseitig vom zu trennenden Strömungsmedium überflossen werden kann. Ein Paket bzw. ein Stapel aus Abstandselementen unter jeweiliger Zwischenlage eines Membranelementes jeweils zwischen zwei Abstandselementen kann vom Strömungsmedium, wenn die Membranelemente durch geeignet mit einer oder mehreren Durchtrittsöffnungen ausgebildeten Abstandselementen derart in Reihe geschaltet werden, daß das zu trennende Strömungsmedium den Stapel aus Abstandselementen und Membranen mäanderförmig durchströmt. Es versteht sich, daß bei einem großen Membranstapel der vorbeschriebenen Art zwischen dem Eingang, an dem das Strömungsmedium in den Membranstapel eintritt, und dem Ausgang, an dem das Strömungsmedium den Membranstapel in aufkonzentrierter Form als Retentat verläßt, insbesondere bei mäanderförmig durchströmtem Stapel aus Abstandselementen und Membranen, ein sehr großes Partialdruckgefälle auftritt.

Bei gattungsgemäßer Anordnung der Abstandselemente und Membranelemente, d.h. des vorerwähnten Stapels, wird angestrebt, daß während des Durchströmens des zu trennenden Mediums durch den Stapel keine Vermischung des zugeführten primären Strömungsmediums mit dem sich von Zwischenraum zu Zwischenraum, in denen die Membranelemente angeordnet sind, jeweils immer stärker aufkonzentrierten Strömungsmedium stattfindet, da sonst die Trennleistung einer derart ausgestalteten Vorrichtung stark beeinträchtigt werden würde. Dieses könnte insbesondere bei solchen Vorrichtungen, die die voraufgeführten Stapel aus Abstandselementen und Membranelementen verwenden, bei denen konstruktionsbedingt der Zulauf des Strömungsmediums und die einzelnen Hohlräume bzw. Kammern, in denen die Membranelemente zwischen den Abstandselementen liegen, direkt nebeneinanderliegen, zu einer drastischen Verminderung der Trennleistung führen.

Die bisherigen Abstandselemente, insbesondere auch die der gattungsgemäßen Art, weisen, wie ausgeführt, einen um ihre im wesentlichen scheibenförmige Fläche umlaufenden Rand auf. Der Scheibenkörper und der Rand werden regelmäßig einstückig ausgebildet, d.h. das Abstandselement wird regelmäßig in seiner Gesamtheit als Spritzgußteil hergestellt. Grundsätzlich wird dabei angestrebt, den Rand und das scheibenförmige Mittelteil des Abstandselementes exakt gleich dick und eben auszuführen. Da jedoch bekannterweise Spritzgußparameter wie z.B. Spritzdruck, Temperatur des zu spritzenden Werkstoffs und die Fließrichtung im Bereich des Randes und im Bereich des Mittelteils beim Spritzgießvorgang verschieden sind und diese auch die naturgemäß auftretende Schrumpfung des fertig gespritzten Abstandselementes nach Abkühlung beeinflussen, wird regelmäßig auch der umlaufende Rand, der Randbereich und der Mittelbereich des Abstandselementes, wenn auch bei Anwendung hochpräziser Spritzgußtechniken, unterschiedlich dick ausfallen. Dieses hat zur Folge, daß bei allen bisherigen Stapeln aus Abstandselementen unter jeweiliger Zwischenlage eines Membranelements jeweils zwischen zwei aneinanderliegenden Abstandselementen im Randbereich ein Ringspalt auftritt, über den ein außen am Stapel vorbeiströmendes zu trennendes Medium in die Räume bzw. die Kammern, in denen sich das schon aufkonzentrierte und aufgrund des sich im Stapel von Raum zu Raum vergrößernden Druckgefälles auf immer niedrigerem Druck befindliche Strömungsmedium befindet, eindringen kann und sich mit diesem vermischen kann.

Es wurde versucht, dieses Problem dadurch zu beheben, daß man im umlaufenden Randbereich ein gesondertes Dichtungselement, beispielsweise einen 0-Ring, vorsah, um im Randbereich eine Dichtwirkung zwischen jeweils zwei aneinanderliegenden Abstandselementen zu erreichen, was aber für die Herstellung, Montage und Wartung bzw. Wartungsfreiheit von außerordentlich großem Nachteil ist.

Es ist deshalb Aufgabe der vorliegenden Erfindung, Abstandselemente zu schaffen, die zwar massenweise als Spritzgußteile herstellbar sein sollen, andererseits aber bei aufeinandergestapelter Form jeweils zwischen sich Hohlräume bilden, in denen das Membranelement jeweils angeordnet ist und vom Strömungsmedium wenigstens einseitig überflossen werden kann, ohne daß ein Eindringen des primär einem derartigen Stapel zugeführtes, zu trennendes Medium von außen in die Hohlräume bzw. die Kammern möglich ist, wobei die Abstandselemente im wesentlichen oder vollständig unter Beibehaltung bisheriger Fertigungstechniken einfach und kostengünstig herstellbar und zur massenhaften Verwendung bereitstellbar sein sollen.

Gelöst wird die Aufgabe gemäß der Erfindung dadurch, daß der Rand gegenüber dem Rand benachbart angeordneter Abstandselemente dichtend ausgebildet ist.

Der Vorteil der erfindungsgemäßen Lösung besteht im wesentlichen darin, daß somit auf einfache Weise eine Abdichtung zwischen dem Bereich des Zulaufes des Strömungsmediums zu einem Stapel, wenn das Strömungsmedium konstruktionsbedingt zunächst außen am Stapel vorbeigeführt wird, möglich wird, da keine gesonderten Dichtmittel wie 0-Ringe oder dergleichen vorgesehen werden müssen. Vielmehr ist erfindungsgemäß der Randbereich bzw. der umlaufende Rand des Abstandselementes derart ausgebildet, daß er im Zusammenwirken mit einem daraufliegenden Abstandselement selbst einen dichtenden Abschluß der somit zwischen den beiden Abstandselementen gebildeten Kammer ermöglicht. Dieses kann beispielsweise durch geeignete Formgebung und/oder Querschnittsformgebung des Randes bewirkt werden, so daß allein durch das Zusammenpressen eines Stapels derart ausgebildeter Abstandselemente über einen vorzugsweise zentral den Stapel durchquerenden Bolzen und damit zusammenwirkende beidseitig den Stapel begrenzende Stirnelemente eine vollständige Dichtwirkung erreicht werden kann, so daß kein Eindringen des zugeführten, außen am Stapel zunächst vorbeifließenden, zu trennenden Mediums in die Kammern möglich ist.

Vorteilhafterweise weist der Scheibenkörper auf seiner zweiten Oberfläche einen umlaufenden zweiten Rand auf, der mit dem ersten Rand des benachbart angeordneten Abstandselementes dichtend zusammenwirkt. Mit dieser Ausgestaltung ist es möglich, den umlaufenden ersten Rand des Abstandselementes quasi lediglich als stegartig orthogonal von der scheibenförmigen ersten Oberfläche des Abstandselementes vorstehenden ersten Rand im Querschnitt sehr einfach auszubilden, da bei dieser Ausgestaltung der erste Rand des einen Abstandselementes mit dem zweiten Rand des daraufliegenden benachbarten Abstandselementes selbst wiederum dichtend zusammenwirken können, beispielsweise durch entsprechendes überlappendes Ineinandergreifen bzw. überlappendes Aneinanderliegen.

Um für diesen Fall eine besonders wirksame Ausgestaltung des Abstandselementes zu erreichen, die auch in einem gewissen Maße Fertigungstoleranzen der Abstandselemente im Bereich der dichtend ausgebildeten Ränder toleriert und damit die Herstellbarkeit weiterhin kostengünstig gewährleisten zu können, ist vorteilhafterweise der zweite Rand als von der zweiten Oberfläche im wesentlichen orthogonal wegstehender, lippenartiger Vorsprung ausgebildet.

Gemäß einer weiteren vorteilhaften Ausgestaltung des Abstandselementes ist der zweite Rand des Abstandselements derart ausgebildet, daß dieser seitlich am ersten Rand des benachbarten Abstandselementes beim Trennvorgang des Strömungsmediums anliegt und somit einen dichtenden Abschluß der Kammer bzw. des Hohlraumes, in dem sich das Membranelement befindet und das zu trennende Strömungsmedium fließt, zu schaffen, d.h. gegen außen an einem derart ausgebildeten Stapel vorbeiströmendes primäres, zu trennendes Strömungsmedium. Diese Ausgestaltung gestattet es zudem, daß bei Inbetriebnahme einer Vorrichtung, die mit einem erfindungsgemäß ausgebildeten Abstandselementstapel ausgerüstet ist, aufgrund der bei Betriebsaufnahme sehr hohen Druckdifferenz von ≥ 20 bar ein Druckausgleich dadurch möglich ist, daß der zweite Rand auf das Zentrum des Abstandselements hin weggedrückt werden kann, die Dichtung also geöffnet wird und beim ordnungsgemäßen Betrieb, bei dem beispielsweise eine Druckdifferenz vom äußeren Ringspalt zur Kammer von 4 bar vorherrscht, wieder am Rand des benachbarten Abstandselementes dichtend anliegt.

Die Dichtwirkung selbst kann vorteilhafterweise dadurch erhöht werden, daß der erste Rand gegenüber dem Scheibenkörper elastisch ausgebildet ist, was vorzugsweise alternativ oder zusätzlich auch dadurch bewirkt werden kann, daß der zweite Rand gegenüber dem Scheibenkörper elastisch ausgebildet ist.

Vorzugsweise wird die Härte (Shorehärte) der Ränder derart eingestellt, daß sie kleiner als die Härte (Shorehärte) des Scheibenkörpers ist.

Es ist vorzugsweise möglich, den Rand bzw. die Ränder des Abstandselementes, selbst wenn diese im voraufgeführten Sinne unterschiedliche Härten gegenüber dem Scheibenkörper des Abstandselementes aufweisen, durch Steuerung der Zufuhr unterschiedlich in der Härte eingestellter Spritzgußwerkstoffe, die in die Spritzgußform eingespritzt werden, unterschiedlich hart und/oder elastisch auszubilden. Eine derartige Verfahrensführung und ein entsprechendes Formwerkzeug sind jedoch nur verhältnismäßig aufwendig und damit kostenträchtig zu realisieren. Aus diesem Grunde ist eine weitere vorteilhafte Ausgestaltung des Abstandselementes derart ausgebildet, daß der Werkstoff des ersten Randes gegenüber dem Werkstoff des zweiten Randes unterschiedlich gewählt wird, d.h. den ersten Rand zusammen mit dem scheibenförmigen Körper zu spritzen und den zweiten Rand mit beispielsweise geringerer Härte in einem gesonderten, gegebenenfalls aber mit der Herstellung des Abstandselementes simultan durchführbaren Anspritzvorganges auszubilden.

Die Abstandselemente selbst können aus unterschiedlich geeigneten spritzfähigen Kunststoffwerkstoffen, gegebenenfalls aber auch aus Metall, hergestellt werden. Dabei hat es sich aber als vorteilhaft herausgestellt, für Trennzwecke im Lebensmittelbereich das Abstandselement aus einem Kunststoffwerkstoff wie Polysulfon herzustellen, wohingegen für Zwecke hochreaktiver zu trennender Medien vorzugsweise der das Abstandselement bildende Werkstoff Polyvenylensulfid ist.

Die Erfindung wird nun unter Bezugnahme auf die nachfolgenden schematischen Zeichnungen anhand eines Ausführungsbeispieles im einzelnen beschrieben. Darin zeigen:
- Fig. 1: im Schnitt eine Vorrichtung, bei der ein Stapel aus Abstandselementen der hier beschriebenen Art eingesetzt wird,
- Fig. 2: in vergrößerter Darstellung einen Ausschnitt A von Fig. 1,
- Fig. 3: in nochmals vergrößerter Darstellung einen Ausschnitt B von Fig. 1,
- Fig. 4: eine Darstellung der Ränder der aneinanderliegenden Abstandselemente gemäß Fig. 3, jedoch mit gesondert vom ersten Rand ausgebildeten zweiten Rändern mit gegenüber den ersten Rändern unterschiedlich hart ausgebildeten und/ oder gesondert angespritzten zweiten Rändern, die als lippenförmige Vorsprünge ausgebildet sind, und

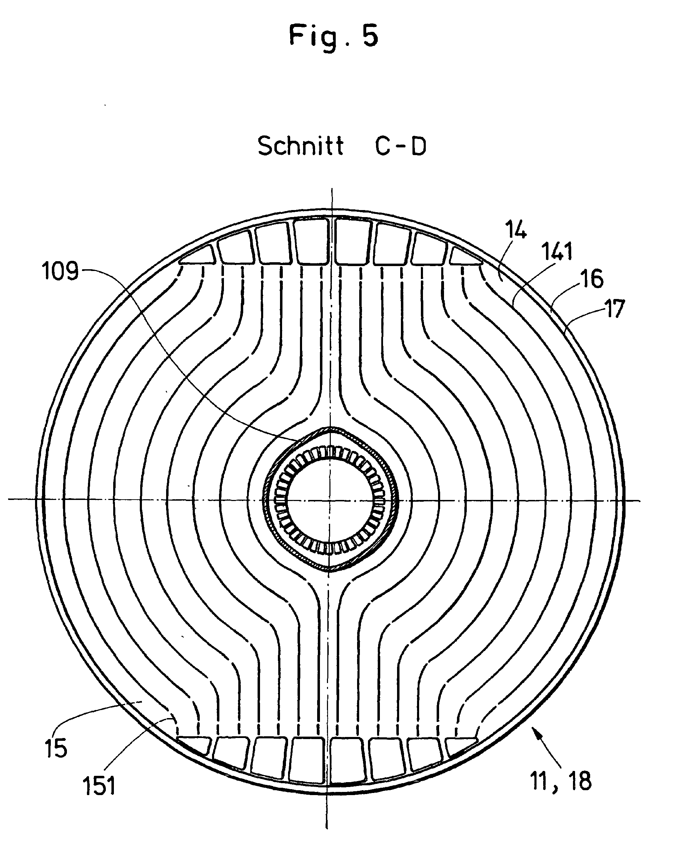

- Fig. 5: einen Schnitt C-D durch die Vorrichtung 10, jedoch ohne Gehäuse und Rohrbolzen.

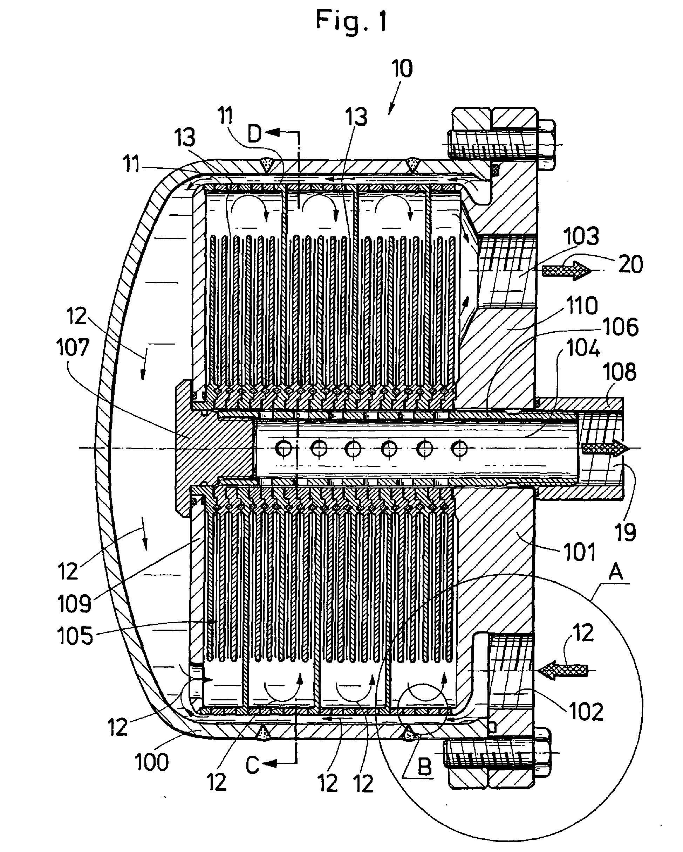

Es wird zunächst Bezug genommen auf die Darstellung von Fig. 1, in der im Querschnitt beispielhaft eine Vorrichtung 10 dargestellt ist, bei der Abstandselemente 11 Verwendung finden, auf die die Erfindung gerichtet ist. Da Vorrichtungen 10 dieser Art dem Fachmann grundsätzlich bekannt sind, wird nur kurz auf die Vorrichtung eingegangen.

Die Vorrichtung 10 weist ein Gehäuse 100 auf, das mittels eines scheibenförmigen Verschlußelementes 101 dichtend verschlossen wird. Im Verschlußelement 101 ist eine Zufuhröffnung 102 für die Zufuhr von in der Vorrichtung 10 zu trennendem Strömungsmedium 12 (Feed) vorgesehen und eine Abfuhröffnung 103, durch die das Retentat 20 (Konzentrat) die Vorrichtung 10 verläßt. Des weiteren ist hier im wesentlichen zentral im Verschlußelement 101 eine weitere Abfuhröffnung 104 vorgesehen, über die das Permeat 19 die Vorrichtung 10 verläßt.

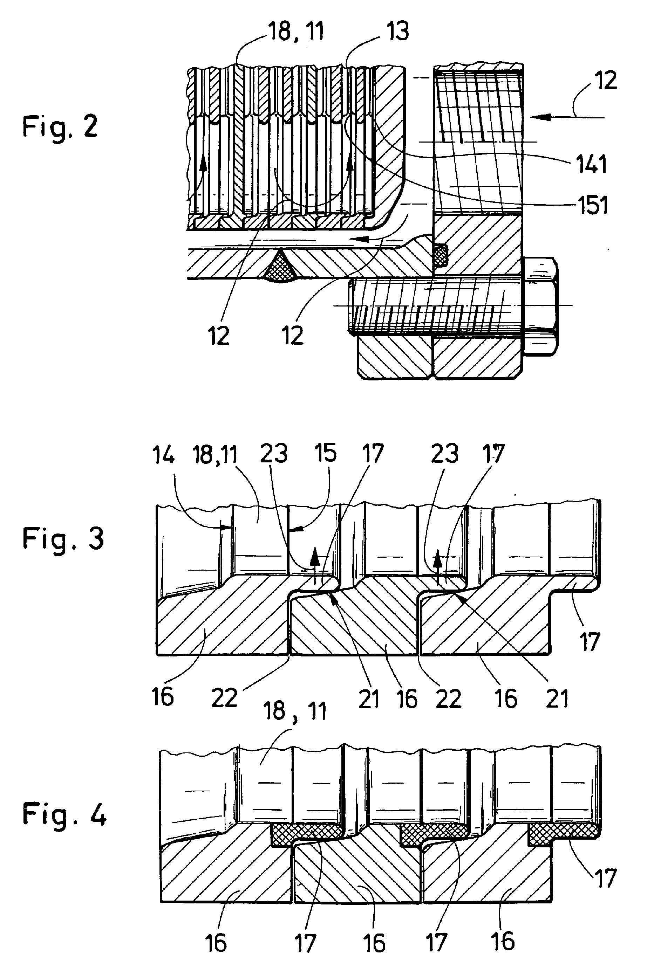

Im Gehäuse 100 ist auf an sich bekannte Weise ein Stapel 105 angeordnet, der aus einer vorbestimmten Menge sich jeweils im Stapel abwechselnder Abstandselemente 11 und Filterelemente 13 besteht, vergleiche auch Fig. 2. Die Abstandselemente 11 und die Filterelemente 13 sind im wesentlichen kreis- bzw. kreisscheibenförmig ausgebildet und werden zentral durch einen rohrförmig ausgebildeten Bolzen 106 durchquert und so über geeignet ausgebildete Muttern 107, 108 aufeinander gepreßt, daß im Zentralbereich der Filterelemente 13 um den Rohrbolzen 106 herum angeordnete Dichtungselemente 109, beispielsweise in Form von 0-Ringen, in Eingriff kommen und den zwischen zwei Abstandselementen 11 gebildeten Raum, in dem jeweils ein Filterelement 13 angeordnet ist, zum Rohrbolzen 106 hin dichtend verschließen.

Das in die Vorrichtung 10 zugeführte Strömungsmedium 12 tritt bei Betriebsaufnahme über die Rohröffnung 102 in die Vorrichtung 10 ein und strömt in den Stapel 105 ein. Je nach Ausgestaltung der Abstandselemente 11 und/oder je nach Wunsch, ob der Stapel in Form einer strengen Reihenschaltung mäanderförmig durchflossen werden soll, werden alle Filterelemente 13 vom Strömungsmedium 12 überströmt, im in Fig. 1 dargestellten Beispiel handelt es sich um eine Kombination von Reihenschaltung und Parallelschaltung von Filterelementen 13, wobei das Strömungsmedium 12 nach Überströmen aller Filterelemente 13 in aufkonzentrierter Form die Vorrichtung 10 über die Abfuhröffnung 103 als Retentat 20 verläßt. Die Filterelemente 13 sind hier in dem in den Figuren dargestellten Beispiel als sogenannte Membrantaschen bzw. Kissenmembranen bzw. Membrankissen (synonyme Begriffe) ausgebildet. Der Teil des Strömungsmediums 12, der durch die membranaktive Fläche derartiger Filterelemente 13 zu permeieren vermag, wird im Inneren der Membrantasche gesammelt und zentral in den Eintrittsöffnungen 110 aufweisenden Rohrbolzen 106 geleitet und von dort, vergleiche auch oben, als Permeat 19 aus der Vorrichtung 10 herausgeführt.

Es wird nun Bezug genommen auf die Fig. 2 bis 4. In Fig. 2 ist in gegenüber Fig. 1 vergrößerter Darstellung ein Ausschnitt des Stapels 105 dargestellt, der eine Mehrzahl von Abstandselementen 11 aufweist, zwischen denen jeweils immer ein Filterelement 13 angeordnet ist. Das Filterelement 13 weist einen scheibenförmigen Körper auf, auf dem Erhaben von seinen beiderseitigen Oberflächen 14, 15 wegstehende Vorsprünge 141, 151 ausgebildet sein können, so daß ein zwischen zwei Abstandselementen angeordnetes Filterelement 13 geringfügig auf Abstand von den Oberflächen 14, 15 gehalten werden kann. Dadurch wird sichergestellt, daß das Strömungsmedium 12 auf beiden Seiten das flächenförmige Filterelement 13 überströmen kann. Die Abstandselemente 11 weisen jeweils einen an ihrer ersten Oberfläche 14 und an ihrer zweiten Oberfläche 15 umlaufenden ersten Rand 16 bzw. zweiten Rand 17 auf, vergleiche Fig. 3. Beide Ränder 16, 17 stehen im wesentlichen orthogonal von den jeweiligen Oberflächen 14 bzw. 15 des Scheibenkörpers 18 weg, vergleiche insbesondere die gegenüber den Darstellungen von Fig. 1 und 2 nochmals vergrößerten Ausschnitt des Stapels gemäß den Fig. 3 und 4. Der Rand 16 des einen Abstandselementes 11 schafft gegenüber dem Rand 16 des benachbart angeordneten Abstandselementes 11 eine Dichtung 21.

Bei der in den Figuren dargestellten Ausgestaltung der Ränder 16 wird die Dichtung 21 durch den mit dem Rand 16 verbundenen Rand 17 des einen Abstandselementes 11 mit dem Rand 16 des benachbart angeordneten Abstandselements 11 bewirkt, wobei dessen zweiter Rand 17 wiederum mit dem dazu benachbarten Rand 16 des dazu benachbarten Abstandselements 11 usw. eine Dichtung bildet.

In den Fig. 3 und 4 ist gut ersichtlich, daß der zweite Rand 17 im wesentlichen orthogonal von der zweiten Oberfläche 15 wegstehend ausgebildet ist. Der zweite Rand 17 ist hier als lippenartiger Vorsprung ausgebildet. Die Fig. 3 und 4 geben den Zustand wieder, bei dem der Druck des Mediums 12 im Membranstapel zwar aufgrund des im Membranstapel auftretenden Partialdruckgefälles des zu trennenden Mediums 12 kleiner ist als der Druck des außen am Stapel 105 vorbeifließenden, zugeführten Mediums, aber immerhin noch so groß ist, daß die zweiten Ränder 17 die in den Fig. 3 und 4 dargestellte Dichtstellung einnehmen. Bei Aufnahme des Trennbetriebes mittels der Vorrichtung 10 tritt jedoch eine sehr hohe Druckdifferenz von ≥ 20 bar auf, da im Augenblick der Betriebsaufnahme regelmäßig nur ein Innendruck im Stapel 105 von 1 bar (Atmosphärendruck) herrscht. Die zweiten Ränder 17 sind in bezug auf ihre Werkstoffwahl und die Einstellung der Härte (Shorehärte) des Werkstoffs so gewählt, daß sie derart elastisch sind, daß bei Betriebsaufnahme aufgrund des hohen Drucks des zugeführten Strömungsmediums 12 durch den geringen Spalt zwischen zwei Abstandselementen 11 bzw. den Rändern 16 der Abstandselemente durch den konstruktiv gewählten Spalt 22, vergleiche Fig. 3, das Strömungsmedium 12 eindringt und die zweiten Ränder 17 in Richtung der Pfeile 23 anhebt, so daß das Strömungsmedium 12 von außen in die Räume zwischen den Abstandselementen 11 eindringen kann. Hat sich nach Betriebsaufnahme dann nachfolgend in den Zwischenräumen ein genügend großer Innendruck ausgebildet, gehen die zweiten Ränder 17 wieder entgegen der Richtung des Pfeiles 23 in ihre Ausgangsstellung zurück, so daß sich wieder zwischen zwei benachbarten Rändern 16, 17 eine Dichtung 21 bildet. Durch den vorbeschriebenen Druckausgleich bei Betriebsaufnahme zwischen dem zugeführten Strömungsmedium 12 und dem Druck in den Zwischenräumen wird eine Zerstörung der Filterelemente 13 durch äußere Druckbeaufschlagung zum Zeitpunkt der Betriebsaufnahme verhindert.

Aus Fig. 4 ist eine Modifikation des Randbereiches des Abstandselementes 11 gegenüber der Ausbildung gemäß Fig. 3 ersichtlich. Dabei ist bei Fig. 4 der zweite Rand 17 als gesondertes Teil ausgebildet und mit dem ersten Rand 16 verbunden, beispielsweise durch einen gesonderten Herstellungsvorgang im Zuge der Herstellung des Abstandselementes 11, bei dem der zweite Rand 17 beispielsweise angespritzt wird. Im Zuge der Herstellung kann es auch realisiert werden, den ersten Rand 16 gegenüber dem Scheibenkörper 18 elastisch auszubilden, d.h. nicht nur den zweiten Rand 17 gegenüber dem Scheibenkörper 18.

Der das Abstandselement 11 bildende Werkstoff kann beliebiger geeigneter Kunststoffwerkstoff sein, der spritzfähig sein sollte, beispielsweise Polysulfon oder Polyvenylensulfid.

### Bezugszeichenliste

- 10: Vorrichtung
- 100: Gehäuse
- 101: Verschlußelement
- 102: Zufuhröffnung
- 103: Abfuhröffnung
- 104: Abfuhröffnung
- 105: Stapel
- 106: Rohrbolzen
- 107: Mutter
- 108: Mutter
- 109: Dichtungselement
- 110: Öffnung
- 11: Abstandselement
- 12: Strömungsmedium (Feed)
- 13: Filterelement
- 14: erste Oberfläche (Abstandselement)
- 141: wegstehende Vorsprünge auf der Oberfläche 14
- 151: wegstehende Vorsprünge auf der Oberfläche 15
- 15: zweite Oberfläche (Abstandselement)
- 16: erster Rand
- 17: zweiter Rand
- 18: Scheibenkörper
- 19: Permeat
- 20: Retentat
- 21: Dichtung (Ort der Dichtung)
- 22: Spalt
- 23: Pfeil 1

## Patentansprüche

1. Abstandselement (11) zur Lenkung von Strömungsmedien (12), insbesondere bei Vorrichtungen (10) zum Filtern und Trennen der Strömungsmedien durch Mikrofiltration, Ultrafiltration, Nanofiltration und Umkehrosmose, wobei jeweils zwischen zwei im wesentlichen scheibenförmig ausgebildeten Abstandslementen (11) ein wenigstens einseitig vom Strömungsmedium (12) überflossenes Filterelement (13) einschließbar ist und wobei das Abstandselement (11) an wenigstens einer ersten (14) seiner beiden Oberflächen(14, 15) einen umlaufenden Rand (16) aufweist, **dadurch gekennzeichnet, daß** der Rand (16) gegenüber dem Rand (16) benachbart angeordneter Abstandselemente (11) dichtend (21) ausgebildet ist.

2. Abstandselement nach Anspruch 1, **dadurch gekennzeichnet, daß** der Scheibenkörper (18) auf seiner zweiten Oberfläche (15) einen umlaufenden zweiten Rand (17) aufweist, der mit dem ersten Rand (16) des benachbart angeordneten Abstandselementes (11) dichtend zusammenwirkt.

3. Abstandselement nach Anspruch 2, **dadurch gekennzeichnet, daß** der zweite Rand (17) als von der zweiten Oberfläche (15) im wesentlichen orthogonal wegstehender lippenartiger Vorsprung ausgebildet ist.

4. Abstandselement nach einem oder beiden der Ansprüche 2 oder 3, **dadurch gekennzeichnet, daß** der zweite Rand (17) des einen Abstandselementes (11) seitlich am ersten Rand (16) des benachbarten Abstandselementes (11) beim Trennvorgang des Strömungsmediums (12) anliegt.

5. Abstandselement nach einem oder mehreren der Ansprüche 1 bis 4, **dadurch gekennzeichnet, daß** der erste Rand (16) gegenüber dem Scheibenkörper (18) elastisch ausgebildet ist.

6. Abstandselement nach einem oder mehreren der Ansprüche 2 bis 5, **dadurch gekennzeichnet, daß** der zweite Rand (17) gegenüber dem Scheibenkörper (18) elastisch ausgebildet ist.

7. Abstandselement nach einem oder beiden der Ansprüche 5 oder 6, **dadurch gekennzeichnet, daß** die Härte (Shorehärte) der Ränder (16, 17) kleiner als die Härte (Shorehärte) des Scheibenkörpers (18) ist.

8. Abstandselement nach einem oder mehreren der Ansprüche 1 bis 7, **dadurch gekennzeichnet, daß** der Werkstoff des ersten Randes (16) gegenüber dem Werkstoff des zweiten Randes (17) unterschiedlich gewählt ist.

9. Abstandselement nach einem oder mehreren der Ansprüche 1 bis 8, **dadurch gekennzeichnet, daß** der das Abstandselement (11) bildende Werkstoff Polysulfon ist.

10. Abstandselement nach einem oder mehreren der Ansprüche 1 bis 8, **dadurch gekennzeichnet, daß** der das Abstandselement (11) bildende Werkstoff Polyvenylensulfid ist.

11. Abstandselement nach einem oder mehreren der Ansprüche 1 bis 10, **dadurch gekennzeichnet, daß** der Rand (16) gegenüber dem Rand (16) benachbart angeordnete Abstandselemente (11) derart angeordnet ist, daß er bei Überschreitung einer vorbestimmbaren, einstellbaren Druckdifferenz zwischen dem Druck des Strömungsmediums (12) im Innenraum des Gehäuses (100) und dem Druck des Strömungsmediums (12) im Raum zwischen zwei Abstandselementen (11), in dem das Filterelement (13) angeordnet ist, zum Druckausgleich beider Ströme des Strömungsmediums (12) elastisch verformbar ist.

## Claims

1. Spacer element (11) for guiding flowing media (12), particularly with devices (10) for filtering and separating the flowing media through microfiltration, ultrafiltration, nanofiltration and reverse osmosis, whereby a filter element (13) over which flowing medium (12) flows on at least one side is adapted to be inserted between two spacer elements (11) formed essentially as plates, and whereby the spacer element (11) has on at least a first (14) of its two surfaces (14, 15) a surrounding rim (16), **characterised in that** the rim (16) is formed in a sealing way with respect to the rim (16) of adjacently arranged spacer elements (11).

2. Spacer element according to claim 1, **characterised in that** the plate element (18) comprises on its second surface (15) a surrounding second rim (17) which cooperates in a sealing way with the first rim (16) of the adjacently arranged spacer element (11).

3. Spacer element according to claim 2, **characterised in that** the second rim (17) is formed as a lip-like projection standing essentially orthogonally away from the second surface (15).

4. Spacer element according to one or both of the claims 2 or 3, **characterised in that** the second rim (17) of one spacer element (11) lies laterally against the first rim (16) of the adjacent spacer element (11) during the separating process of the flowing medium (12).

5. Spacer element according to one or more of the claims 1 to 4, **characterised in that** the first rim (16) is formed elastically with respect to the plate element (18).

6. Spacer element according to one or more of the claims 2 to 5, **characterised in that** the second rim (17) is formed elastically with respect to the plate element (18).

7. Spacer element according to one or both of the claims 5 or 6, **characterised in that** the hardness (Shore Hardness) of the rims (16, 17) is smaller than the hardness (Shore Hardness) of the plate element (18).

8. Spacer element according to one or more of the claims 1 to 7, **characterised in that** the material of the first rim (16) is selected so as to be different from the material of the second rim (17).

9. Spacer element according to one or more of the claims 1 to 8, **characterised in that** the material forming the spacer element (11) is polysulphon.

10. Spacer element according to one or more of the claims 1 to 8, **characterised in that** the material forming the spacer element (11) is polyvenylene sulphide.

11. Spacer element according to one or more of the claims 1 to 10, **characterised in that** the rim (16) is arranged in such a way with respect to the rim (16) of adjacently arranged spacer elements (11) that, upon exceeding of a predefinable, adjustable pressure difference between the pressure of the flowing medium (12) in the inner space of the housing (100) and the pressure of the flowing medium (12) in the space between two spacer elements (11), in which the filter element (13) is arranged, it is adapted to be elastically deformed for the pressure compensation of the two flows of the flowing medium (12).

## Revendications

1. Elément d'écartement (11) destiné à diriger des fluides en écoulement (12), notamment dans des dispositifs (10) de filtration et de séparation de fluides en écoulement par microfiltration, ultrafiltration, nanofiltration et osmose inverse, un élément filtrant (13) traversé au moins sur un côté par le fluide en écoulement (12) pouvant être enfermé respectivement entre deux éléments d'écartement (11) conçus sensiblement en forme de disque et l'élément d'écartement (11) comprenant sur au moins une première (14) de ses deux surfaces (14, 15) un bord circulaire (16), **caractérisé en ce que** le bord (16) est conçu de manière étanche (21) par rapport au bord (16) des éléments d'écartement (11) voisins.

2. Elément d'écartement selon la revendication 1, **caractérisé en ce que** le corps en forme de disque (18) comprend sur sa seconde surface (15) un second bord circulaire (17), qui coopère de manière étanche avec le premier bord (16) de l'élément d'écartement (11) voisin.

3. Elément d'écartement selon la revendication 2, **caractérisé en ce que** le second bord (17) est conçu comme une saillie du type lèvre s'écartant sensiblement perpendiculairement de la seconde surface (15).

4. Elément d'écartement selon l'une ou deux des revendications 2 ou 3, **caractérisé en ce que** le second bord (17) d'un des éléments d'écartement (11) est latéralement adjacent au premier bord (16) de l'élément d'écartement (11) voisin à l'occasion du processus de séparation du fluide en écoulement (12).

5. Elément d'écartement selon l'une ou plusieurs des revendications 1 à 4, **caractérisé en ce que** le premier bord (16) est conçu de manière élastique par rapport au corps en forme de disque (18).

6. Elément d'écartement selon l'une ou plusieurs des revendications 2 à 5, **caractérisé en ce que** le second bord (17) est conçu de manière élastique par rapport au corps en forme de disque (18).

7. Elément d'écartement selon l'une ou deux des revendications 5 ou 6, **caractérisé en ce que** la dureté (dureté Shore) des bords (16, 17) est inférieure à la dureté (dureté Shore) du corps en forme de disque (18).

8. Elément d'écartement selon l'une ou plusieurs des revendications 1 à 7, **caractérisé en ce que** le matériau du premier bord (16) est sélectionné différemment du matériau du second bord (17).

9. Elément d'écartement selon l'une ou plusieurs des revendications 1 à 8, **caractérisé en ce que** le matériau formant l'élément d'écartement (11) est le polysulfone.

10. Elément d'écartement selon l'une ou plusieurs des revendications 1 à 8, **caractérisé en ce que** le matériau formant l'élément d'écartement (11) est le sulfure de polyvinylène.

11. Elément d'écartement selon l'une ou plusieurs des revendications 1 à 10, **caractérisé en ce que** le bord (16) est disposé par rapport au bord (16) des éléments d'écartement (11) disposés au voisinage, de telle sorte que, lorsqu'une différence de pression réglable, pouvant être prédéfinie entre la pression du fluide en écoulement (12) dans l'espace intérieur du boîtier (100) et la pression du fluide en écoulement (12) dans l'espace situé entre deux éléments d'écartement (11), dans lequel l'élément filtrant (13) est disposé, est dépassée, il peut être déformé de manière élastique pour compenser la pression des deux écoulements du fluide en écoulement (12).
